# EUROPEAN PATENT APPLICATION

(11) **EP 2 144 024 A1**
(43) Date of publication of application: **13.01.2010**
(21) Application number: 08160042.1
(22) Date of filing: 09.07.2008
(51) Int. Cl.: F25D 23/02, A01N 1/02, F25D 11/04, F25D 13/02

(54) **Convection barrier**

(71) Applicant: F. Hoffmann-La Roche AG, 4070 Basel (CH)
(72) Inventor: The designation of the inventor has not yet been filed
(74) Representative: Bohest AG

(57) **Abstract**

A convection barrier (2;2a;2b;2c) for a freezer (1;1a;1b;1c) comprises
- a foil (20;20a;20b;20c) having at least one opening (230;230a;230b;230c) therein,
- storage and transport means (21,22;21a,22a,211a,221a, 25a,27a;21b,22b,25b;21c,22c,25c,28c) for storing and moving the foil (20;20a;20b;20c) so as to transport the at least one opening (230;230a;230b;230c) to a desired position in order to allow access through the at least one opening (230;230a;230b;230c) to the interior of the freezer (1;1a;1b;1c) at the desired position, and
- tensioning means (28a;28b;28c,25c) for continuously keeping the foil (20;20a;20b;20c) in a tensioned state.

## Description

The present invention relates to a convection barrier in accordance with the features of claim 1, and to a freezer comprising such convection barrier.

In clinical studies a wide variety of assays can be carried out to answer questions related to diagnosis (e.g. biomarker), treatment (e.g. efficacy of a drug) and prevention of diseases.

Large sample collections of biological samples can be established e.g. within the context of clinical studies. Such biological samples can be e.g. blood samples (whole blood, plasma, serum), urine samples, tissue samples, cells (cell lines primary cell cultures), proteins, DNA, RNA (RNAi, mRNA), or antibodies.

An automated facility for storing biological samples at -80°C is used in the UK biobank and is described, for example, in the article "Designing and implementing a large-scale automated -80°C archive" by Justin M. Owen and Peter Woods, published in the International Journal of Epidemiology 2008; 37: i56-i61 (doi: 10.1093/ije/dym293). The store described therein comprises a system of drawers arranged in a manner so as to form a shelf, which allows robotic access to the biological samples whilst maintaining storage conditions. The drawers can be opened individually by the robot pulling the respective drawer outwards so as to allow access to the interior of the drawer where the biological samples are stored.

However, this systems has some disadvantages. Firstly, at its front surface each drawer is provided with a block made of styrene in a manner such that the styrene blocks of adjacently arranged drawers abut against one another. Upon opening an individual drawer by pulling the said drawer outwardly, this does inherently bear the risk that an adjacently arranged drawer is also pulled out although this is not intended and may cause an unwanted temperature rise. Also, the leakage in total is comparatively high since the system does not have a separate front door for closing the system.

Cooling of a complete humidity controlled room for storing biological samples as described above to about -80°C is generally feasible. However, at said temperatures standard handling devices, such as for example robots, usually do not work properly. Therefore, particularly for long-term storage of biological samples, specific -80°C freezers are typically used.

Such freezers for the long term storage usually have a thermally insulating door which separates the -20°C environment outside the freezer from the -80°C interior of the freezer. In a so-called "robotic store", a plurality of such freezers is arranged as well as a robot for taking the samples out of the respective freezer. As mentioned above, the robot cannot be arranged in such -80°C environment, since this simply is not economically feasible in such environment, and in addition maintenance of the robot then. Instead, the robot is arranged outside the freezers in the -20°C environment where it is capable of working properly. However, particularly with conventional upright standing freezers certain problems may arise. Firstly, upon having opened the door in order to allow the robot to access the interior of the freezer, the -80°C cooled air flows out of the interior of the freezer while at the same time -20°C air flows from the environment into the interior of the freezer thus leading to a rise in temperature and humidity within the interior of the freezer. This is all the more the case, since the door of the freezer usually must remain open for a considerable period of time until the desired sample (or a number of samples) has been taken out by the robot. Secondly, as already described once the -80°C air flows out, -20°C air flows into the interior of the freezer, thus resulting in two effects: Firstly, it results in a negative pressure which makes the door extremely difficult to get opened again until the negative pressure is equalized by inflowing air through the sealing of the door of the freezer. This usually takes a considerable period of time which may amount up to 30 minutes, for example. Secondly, the cooling down of the -20°C air which is more humid than the -80°C air results in formation of ice within the freezer. Accordingly, defrosting of the freezer is required more often.

It is therefore an object of the invention to overcome the afore-mentioned disadvantages and to suggest suitable measures to avoid or at least greatly reduce the above-described scenarios. Also, loss of energy should be reduced to a minimum while at the same time frequent access to the stored biological samples should be possible.

This object is achieved through a convection barrier as it is specified by the features of the independent claim directed to such convetion barrier, and through a freezer comprising such convection barrier. Specific advantageous embodiments are specified by the features of the dependent claims.

In particular, the convection barrier for a freezer in accordance with the invention comprises:
- a foil having at least one opening therein,
- storage and transport means for storing and moving the foil so as to transport the at least one opening to a desired position in order to allow access through the at least one opening to the interior of the freezer at the desired position, and
- tensioning means for continuously keeping the foil in a tensioned state.

The foil covers the opening to the interior of the freezer, so that the -80°C air may not flow out of the interior of the freezer or only small amounts may flow out of the freezer as the door of the freezer is open. On the other hand, it must be possible to get access to the desired sample or samples stored in the interior of the freezer. This can be achieved by allowing the robot to get access to the sample through the opening or openings provided in the foil. However, since the sample may be stored at any predetermined location in the interior of the freezer the opening must be movable to the position where the respective sample is stored and, accordingly, storage and transport means are provided for storing and transporting the foil so that the opening in the foil can be moved to the said position and can be stored in this position to allow the robot to get access to the sample through the opening. In order avoid jamming of the foil and in order to keep the -80°C air within the interior of the freezer, tensioning means are provided for always keeping the foil in a tensioned state. Thus, outflow of -80°C air out of the interior of the freezer and backflow of -20°C air from the environment into the interior of the freezer is prevented or at least greatly reduced. Accordingly, the above-described disadvantages of temperature rise in the interior of the freezer and negative pressure making the door extremely difficult to open as have occured in prior art freezers are prevented or at least greatly reduced.

In one embodiment of the convection barrier according to the invention, the storage and transport means comprise two elongate reels to which the opposite ends of the foil are mounted and between which the foil extends, as well as a drive for rotating the reels so as to wind up or to unwind the foil from the respective reel in order to transport the at least one opening to the desired position. This is a practical constructive embodiment of the convection barrier according to the invention.

A further embodiment of the convection barrier according to the invention comprises a frame comprising the at least one opening, the frame being inserted in the foil at an intermediate location between the two ends of the foil such that the at least one opening for allowing access to the interior of the freezer can be transported to any of the desired positions. Such frame is a rigid and stable constructive solution for providing the opening in the foil, which allows to reliably position the opening at a desired location so as to allow the robot to get access to the interior of the freezer through the opening.

In one embodiment of the convection barrier according to the invention, the drive comprises a motor connected to one of the two reels, and the tensioning means comprise a return spring connected to the other one of the at least two reels for continuously keeping the foil in a tensioned state. That reel to which the motor is connected is driven by the motor while the other reel is acted upon by the return spring so that the foil is always kept in a tensioned state. This is an advantageous constructional solution that allows various additional options to be conceived, as will be discussed below with respect to some of such options.

In one such option, the drive further comprises a belt engaging both reels, and the return spring is a spring having a low spring rate. Since the belt already provides for synchronization of the two reels - the reels are driven with the same speed - the return spring only must have a low spring rate in order to keep the foil in a tensioned state. While the outer diameter of the respective reel with the foil wound around it continuously changes during movement of the foil, the spring always keeps the foil in a tensioned state.

In another option, the return spring is a spring having a high spring rate. Particularly in the case where there is no mechanical connection between the two reels (such as e.g. by means of the afore-mentioned belt), it is advantageous that the spring has a high spring rate in order to make sure that the foil is always kept in a tensioned state.

One example of such return spring is a torsion spring, although a torsion spring is not the only type of spring that can be used. However, a torsion spring can be arranged within a hollow reel, for example, thus providing an advantageous constructive option of how to realize the convention barrier according to the invention.

In another embodiment of the convection barrier according to the invention, the drive and the tensioning means comprise two motors, one of the two motors being connected to one of the two reels and the other motor being connected to the other one of the two reels. Also, the convection barrier comprises a control unit for operating the two motors in an asynchroneous manner so as to continuously keep the foil in a tensioned state. The control unit has two functions: Firstly, it is necessary to control the speed of the reels, depending on whether the reel is winding the foil up or is unwinding the foil, and depending on how much of the foil is still wound around the respective reel. Secondly, since there is no mechanical connection between the two reels the control drives the two motors in an asynchroneous manner so as to make sure that the foil is always kept in a tensioned state. In this embodiment, one of the two motors acts in a similar manner as the afore-mentioned mechanical return spring, depending on the direction of movement of the foil.

Although some materials are conceivable for the foil, in a particularly advantageous embodiment of the convection barrier of the instant invention the foil is made from polytetrafluoroethylene or may be a mesh, e.g. a glass mesh, coated with polytetrafluoroethylene. This is a material that is readily available on the market and is capable of fulfilling the requirements with regard to the operational demands, in particular with respect to temperature, mechanical stress and durability.

As already mentioned further above, a further aspect of the invention relates to a freezer comprising a housing and a door, the housing having an opening allowing access to the interior of the freezer through the said opening as the dooe of the freezer is open. The freezer further comprises a convection barrier as it has already been described with respect to the various embodiments discussed above. The convection barrier is arranged such that the opening allowing access to the interior of the freezer is covered by the foil. The advantages correspond to those already discussed above in connection with the various embodiments of the convection barrier, so that they need not be reiterated here.

In one particularly advantageous embodiment of the freezer according to the invention, the motor or the motors, respectively, or the belt, of the convection barrier is/are mounted to the freezer outside its housing. This is advantageous since the motor or motors are working well in the environment outside the freezer, e.g. in a -20°C environment, while this is not the case in the -80°C environment in the interior of the freezer. Also, maintenance of these components is well possible to be performed in the said -20°C environment outside the freezer.

Further advantageous aspects of the invention will become apparent from the following description of embodiment of the invention with the aid of the schematic drawings in which:
- Fig. 1: shows a cross-sectional side view of a freezer in accordance with the invention with an embodiment of the convection barrier according to the invention mounted thereto,
- Fig. 2: shows a front view of an embodiment of the convection barrier according to the invention,
- Fig. 3: shows the upper reel of the convection barrier to which the foil is mounted,
- Fig. 4: shows the lower reel of the convection barrier to which the foil is mounted,
- Fig. 5: shows a perspective view of an embodiment of the freezer according to the invention with an embodiment of the convection barrier according to the invention mounted thereto,
- Fig. 6: the detail VI of Fig. 5 in an enlarged view,
- Fig. 7: the detail VII of Fig. 5 in an enlarged view,
- Fig. 8: the detail VIII of Fig. 5 in an enlarged view, partially broken away,
- Fig. 9: the detail IX of Fig. 5 in an enlarged view, partially broken away,
- Fig. 10: shows a perspective view of a further embodiment of the freezer according to the invention with a further embodiment of the convection barrier according to the invention mounted thereto,
- Fig. 11: the detail XI of Fig. 10 in an enlarged view,
- Fig. 12: the detail XII of Fig. 10 in an enlarged view,
- Fig. 13: shows a perspective view of a further embodiment of the freezer according to the invention with a further embodiment of the convection barrier according to the invention mounted thereto,
- Fig. 14: shows detail XIV of Fig. 13 in an enlarged view, and
- Fig. 15: show detail XV of Fig. 13 in an enlarged view.

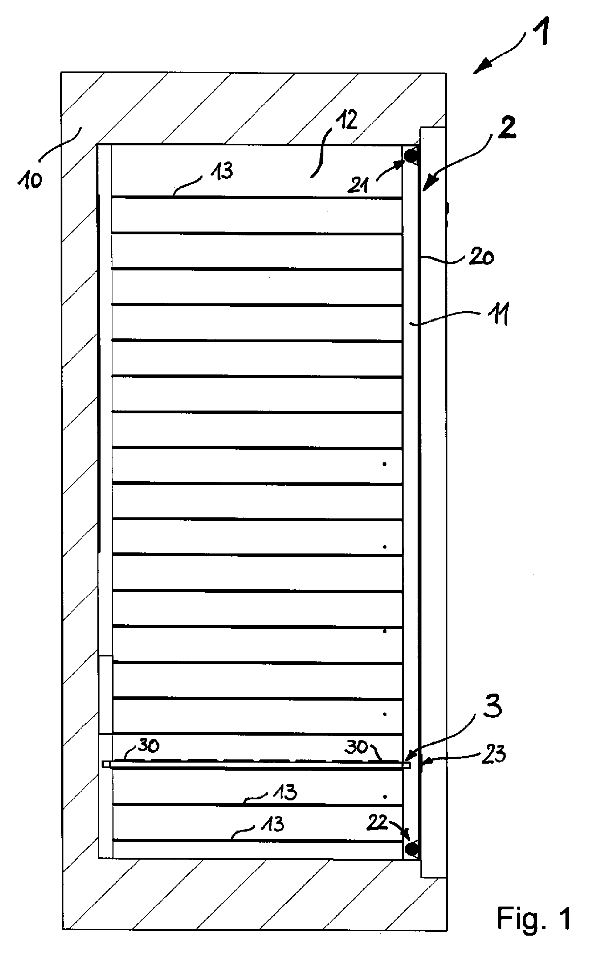

**Fig. 1** shows a cross-sectional side view of a freezer 1 according to the invention with a convection barrier 2 mounted thereto, with the door of the freezer not being shown in Fig. 1 for the sake of simplicity. Freezer 1 comprises a housing 10 having an opening 11 at the front side of the freezer (in Fig. 1 on the right hand side). A plurality of compartments 13 are arranged in the interior 12 of freezer 1. In the third compartment from the bottom, a drawer 3 is represented by way of example which carryies a plurality of trays 30 in which e.g. microtubes (not shown) may be arranged in which the samples are stored. Convection barrier 2 comprises a foil 20 the two opposite ends of which are mounted to two elongate reels, an upper reel 21 and a lower reel 22, so that the foil extends therebetween. Convection barrier 2 is mounted to freezer 1 such that foil 20 of convection barrier 2 covers the opening 11 of freezer 1, so that the flowing out of cold air (e.g. -80°C air) from the interior 12 of freezer 1 is prevented or is at least greatly reduced. As can be seen in Fig. 1, in order to get access to the respective drawer 3 carrying the tray 30 with the desired sample, a frame 23 comprising one or more openings is inserted in the foil at an intermediate location between the two ends of the foil such, that the opening or openings allow access therethrough to drawer 3 carrying the tray 30 with the desired sample.

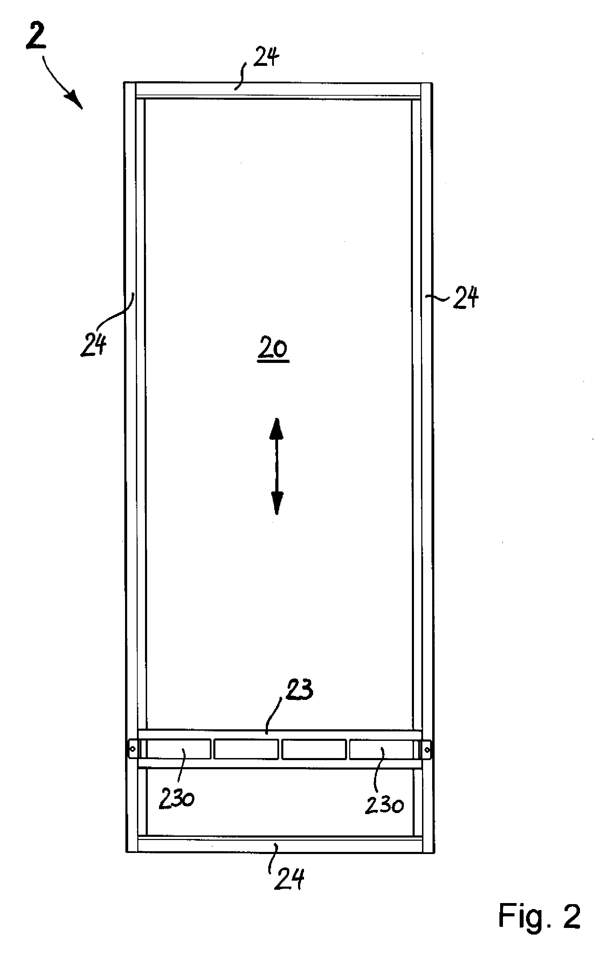

One embodiment of convection barrier 2 according to the instant invention is shown in **Fig. 2****.** In the embodiment shown in Fig. 2, outer frame 24, foil 20, and frame 23 carrying the openings 230 - here four openings - can be seen. Accordingly, four columns of drawers may be arranged in the interior of freezer 1. In order to get access to the various compartments 13 in the interior 12 of freezer 1 where the respective drawer 3 carrying the tray 30 with the desired sample is arranged, frame 23 must be movable up and down in order to get to the respective location, as this is indicated by the arrows in Fig. 2. Frame 23 is preferably made from metal, e.g. aluminum, such as to reliably and stably position the openings 230 at the desired location in front of the respective drawer 3. For proper functioning, foil 20 must be always kept in a tensioned state.

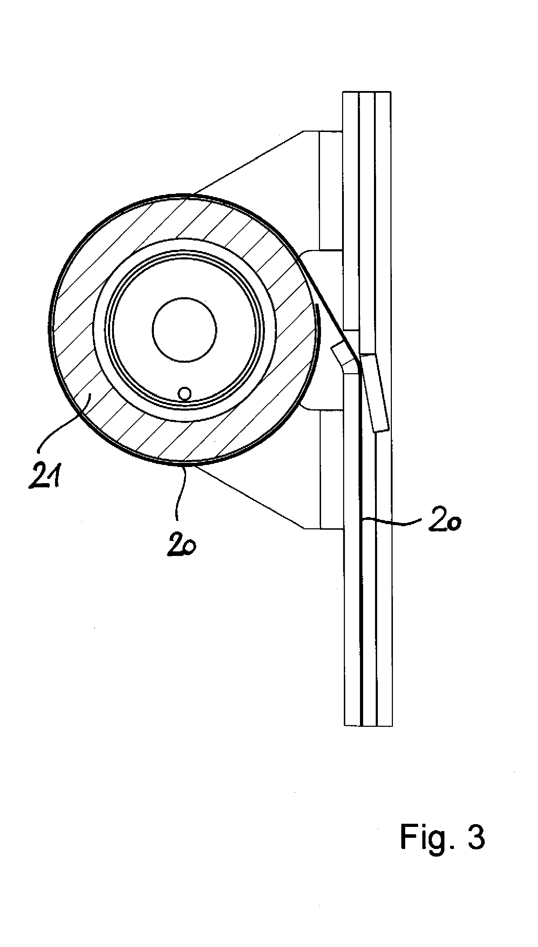

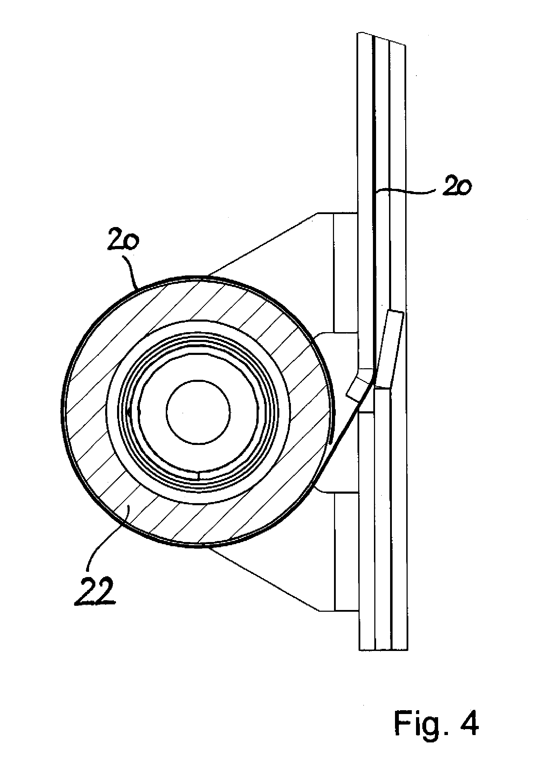

**Fig. 3** shows the elongated upper reel 21 with the one end of foil 20 mounted thereto in an enlarged view, while **Fig. 4** shows the lower reel 22 with the opposite end of foil 20 mounted thereto. Through rotation of the upper and lower reels 21,22 foil 20 can be wound up or can be unwound from the respective reel. This can be achieved in various ways, as will be explained in more detail below.

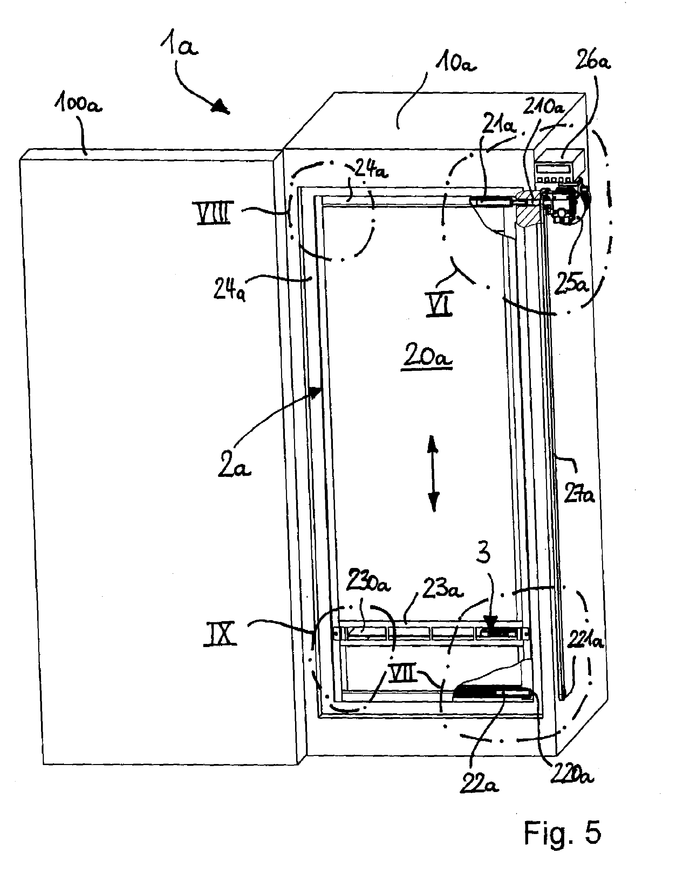

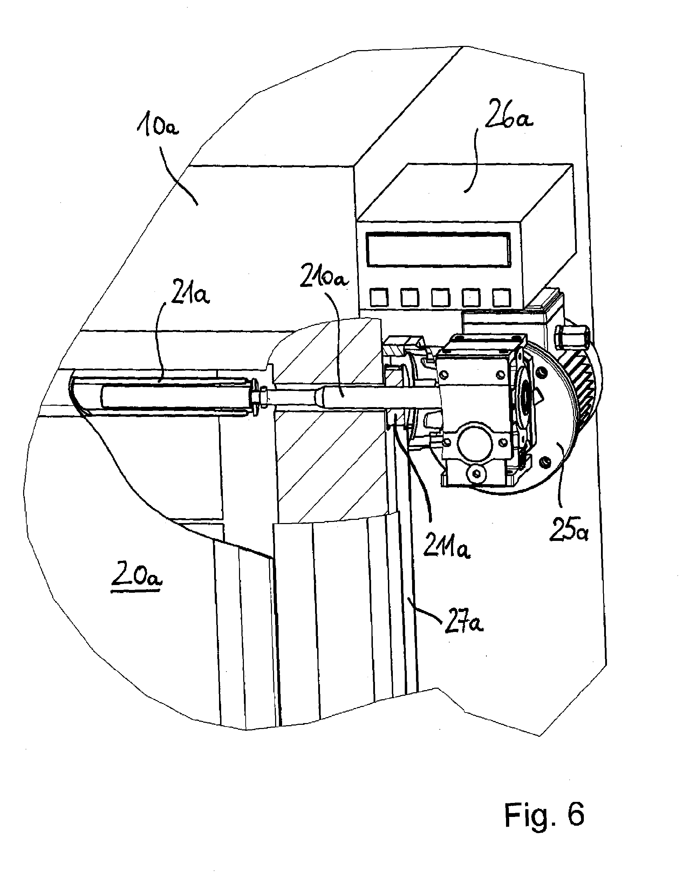

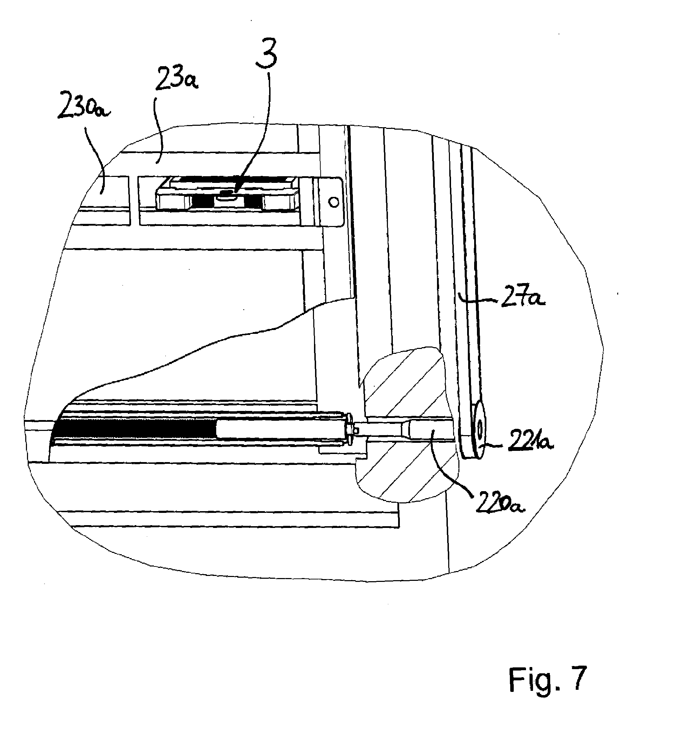

**Fig. 5** shows a perspective view of an embodiment of a freezer according to the instant invention comprising a specific embodiment of a convection barrier according to the invention. In this embodiment like parts are assigned like reference signs but a letter "a" is added. Accordingly, freezer 1a comprises a housing 10a and a door 100a which is shown in its open position. Convection barrier 2a comprises an outer frame 24a, a foil 20a with a frame 23a carrying openings 230a. Foil 20a extends between the two ends thereof which are mounted to elongate upper reel 21a and elongate lower reel 22a, respectively. A motor 25a drivingly engages an axle 210a which itself is connected to elongate upper reel 21a for rotatably driving upper reel 21a. A control unit 26a is provided for operating motor 25a. Lower elongate reel 22a is also connected to an axle 220a. Two belt pulleys 211a and 221a (see also Fig. 6 and Fig. 7) are mounted to axles 210a and 220a, respectively. An endless belt 27a is guided over belt pulleys 211a and 221a and engages the pulleys, thus mechanically connecting axles 210a and 220a. Accordingly, as motor 25a rotatably drives axle 210a (and upper reel 21a) pulley 211a is also rotated and via belt 27a causes pulley 221a to rotate, thus rotating axle 220a (and lower reel 22a). Accordingly, upper and lower reels 21a,22a essentially rotate with the same speed.

**Fig. 6** shows Detail VI of Fig. 5 in an enlarged view. Although already shown in Fig. 5, Fig. 6 more clearly shows that motor 25a and control unit 26a as well as drive pulley 211a and belt 27a arranged on axle 210a are located outside the freezer, e.g. in the above-mentioned -20°C environment where they work properly and can be maintained comparatively easy. The same holds for drive pulley 221a arranged on axle 220a, as this can be seen in greater detail in **Fig. 7****.**

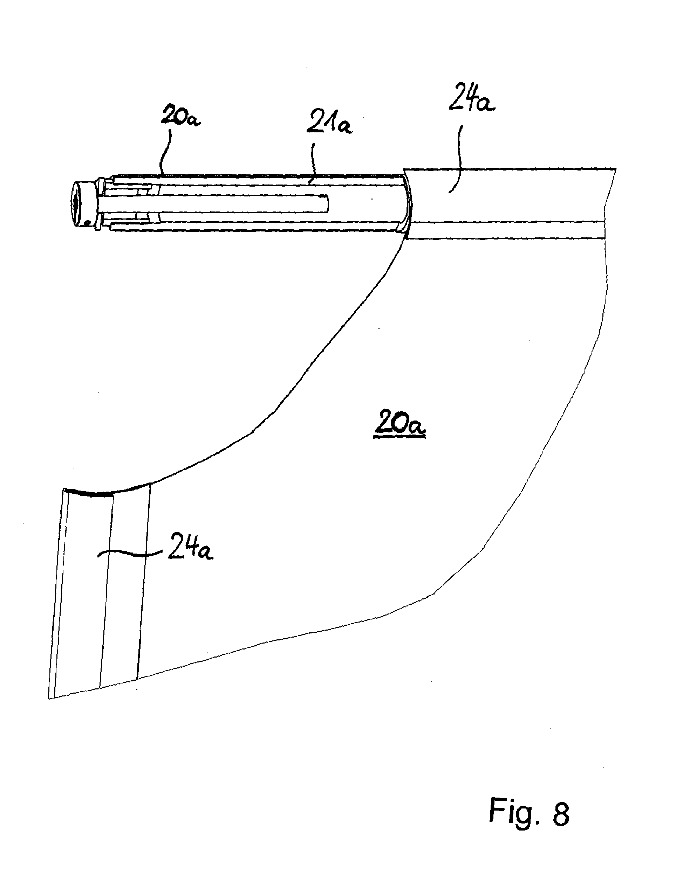

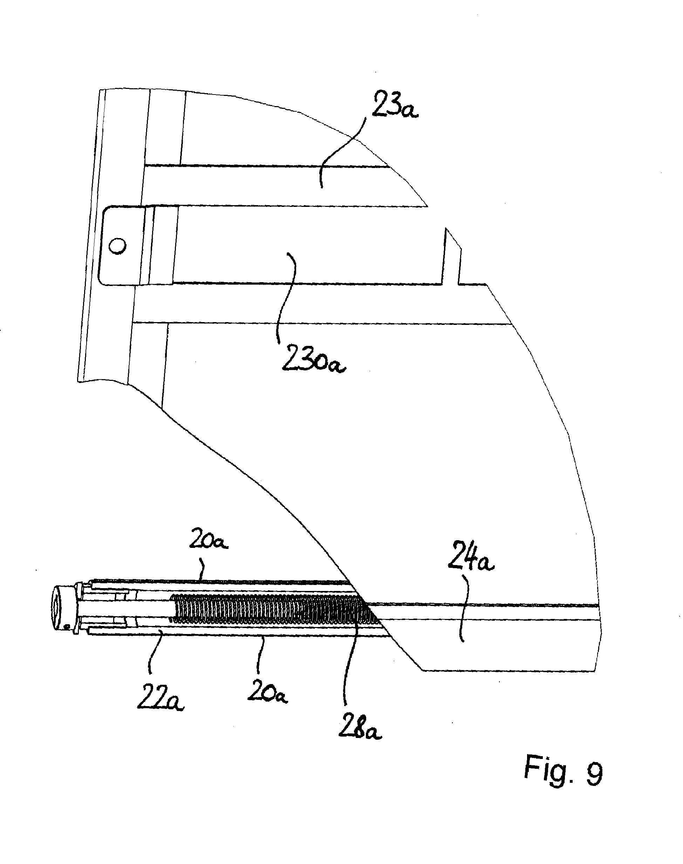

In **Fig. 8** the detail VIII of Fig. 5 is shown in an enlarged view and partially broken away. It can be seen, how foil 20a enters beneath outer frame 24a and can be wound up or unwound from reel 21a. **Fig. 9** shows the detail IX of Fig. 5, also partially broken away. From Fig. 9 it can be seen, that there is a torsion spring 28a arranged in the interior of reel 22a, which is embodied as a hollow reel. Torsion spring 28a is a weak spring which is always in a tensioned state, even when frame 23a carrying the openings 230a is in its lowermost position, so that foil 20a is always kept in a tensioned state.

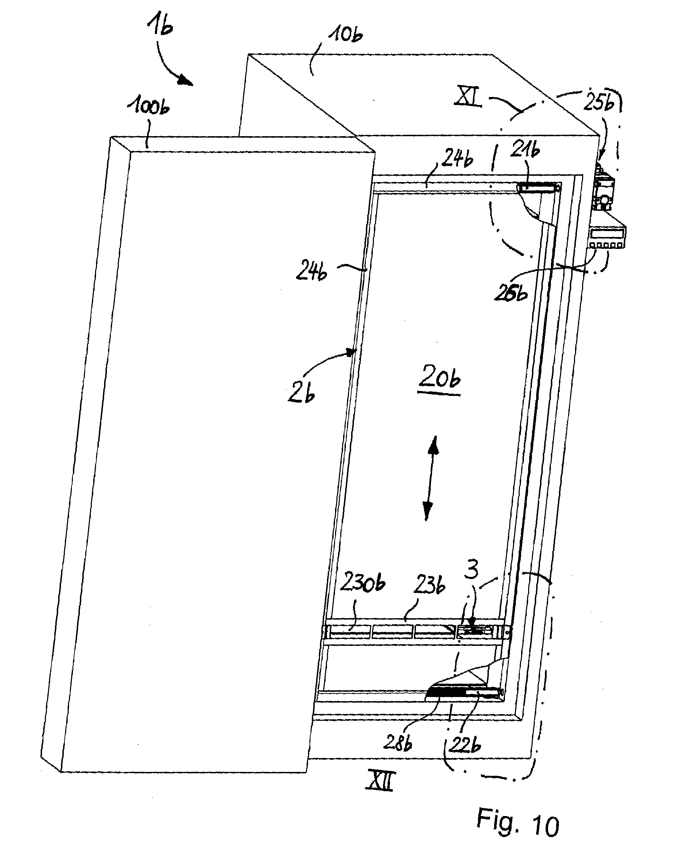

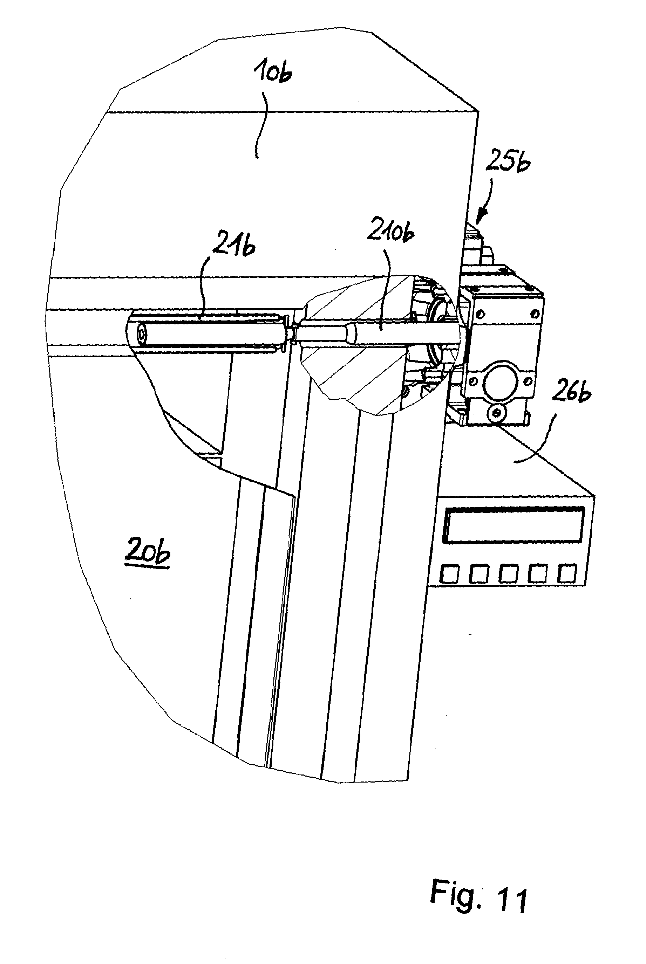

**Fig. 10** shows a further embodiment of the freezer according to the invention comprising a specific embodiment of a convection barrier according to the invention, which is somehow similar to the embodiment shown in Fig. 5. In this further embodiment like parts are again assigned like reference signs but a letter "b" is added. Accordingly, freezer 1b comprises a housing 10b and a door 100b which is shown in its open position. Convection barrier 2b comprises an outer frame 24b, a foil 20b with a frame 23b carrying openings 230b. Foil 20b extends between the two ends thereof which are mounted to elongate upper reel 21b and elongate lower reel 22b, respectively. A motor 25b drivingly engages an axle 210b, as can be seen in **Fig. 11** showing detail XI of Fig. 10 in an enlarged view. Motor 25b is connected to elongate upper reel 21b for rotatably driving upper reel 21b. A control unit 26b is provided for operating motor 25b. In the interior of lower reel 22b which is embodied as a hollow reel, a torsion spring 28b is arranged.

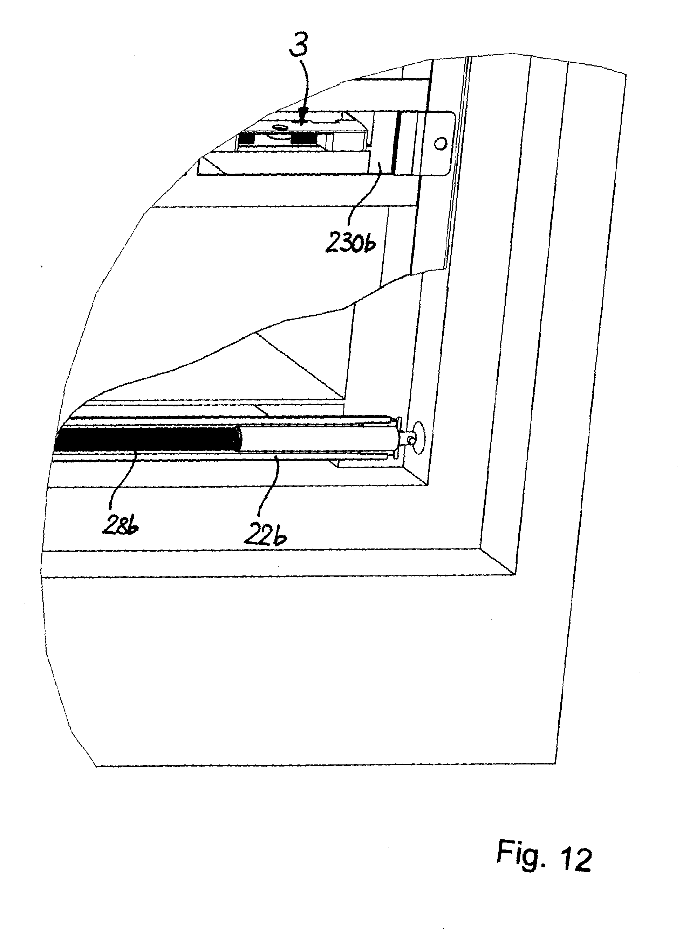

This can be seen more clearly in **Fig. 12** showing detail XII of Fig. 10, also partially broken away. From Fig. 9 it can be seen, that there is a torsion spring 28a arranged in the interior of reel 22a, which is embodied as a hollow reel. Torsion spring 28a is a weak spring which is always in a tensioned state, even when frame 23a carrying the openings 230a is in its lowermost position, so that foil 20a is always kept in a tensioned state.

As to the operation, it is essentially referred to the embodiment described above with respect to Figs. 5-9, however, since there is no mechanical connection between the two reels via a belt, torsion spring 28b is a spring having a high spring rate.

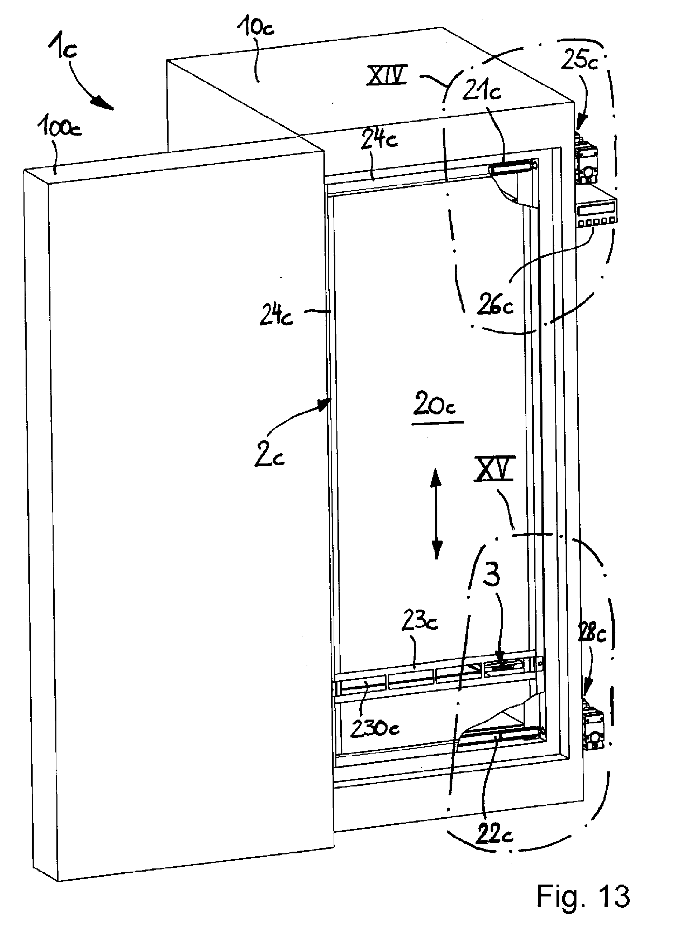

**Fig. 13** shows a perspective view of still a further embodiment of a freezer according to the instant invention comprising a specific embodiment of a convection barrier according to the invention. In this embodiment like parts are assigned like reference signs but a letter "c" is added.

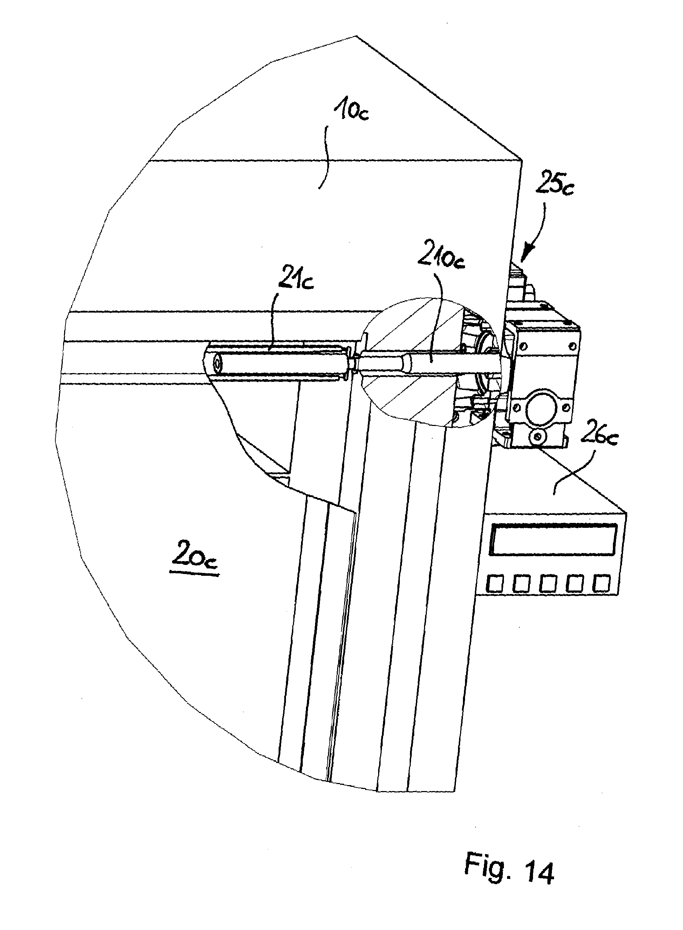

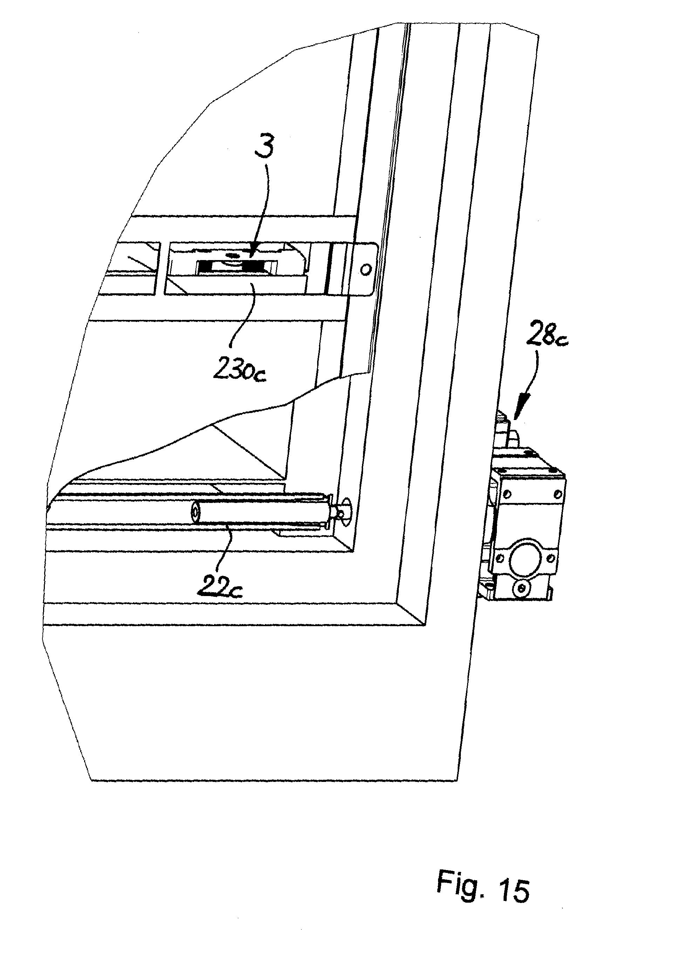

Accordingly, freezer 1c comprises a housing 10c and a door 100c which is shown in its open position. Convection barrier 2c comprises an outer frame 24c, a foil 20c with a frame 23c carrying openings 230c. Foil 20c extends between the two ends thereof which are mounted to elongate upper reel 21c and elongate lower reel 22c, respectively. A motor 25c drivingly engages an axle 210c, as can be seen in **Fig. 14** showing detail XIV of Fig. 13 in an enlarged view. Axle 210c is connected to elongate upper reel 21c for rotatably driving upper reel 21c with the aid of motor 25c. A control unit 26c is provided for operating motor 25c. Lower elongate reel 22c is also connected to an axle 220c. A further motor 28c drivingly engages an axle 220c, as can be seen in **Fig. 15** showing detail XV of Fig. 13 in an enlarged view. Axle 220c is connected to lower reel 22c for rotatably driving lower reel 22c with the aid of motor 28c. Also, motor 28c is connected to control unit 26c (this connection not being shown in Figs. 13-15). Control unit 26c operates the two motors 25c and 28c in an asynchroneous manner. Depending on the direction of winding foil 20c, one of the two motors 25c,28c acts as the driving motor while the other motor 28c,25c acts in a manner similar to the return spring. For example, as motor 25c acts as the driving motor and foil 20c is wound up onto upper reel 21c, then foil 20c is unwound from lower reel 22c and motor 28c acts as the return spring, thus continuously keeping foil 20c in a tensioned state. Or the other way round, as motor 28c acts as the driving motor and foil 20c is wound up onto lower reel 22c, then foil 20c is unwound from upper reel 21c and motor 25c acts as the return spring, thus continuously keeping foil 20c in a tensioned state.

Finally, it is to be noted that many alternatives are conceivable, for example springs other than torsion springs can be used, the openings for gaining access to the interior of the freezer do not necessarily have to be provided in a frame, etc.. Also, it is to be noted that the convection barrier is a separate unit which can be adapted to the respective freezer to which it is to be mounted. Accordingly, the scope of protection is not intended to be limited by the described exemplary embodiments of the invention but rather is defined by the appended claims.

## Claims

1. Convection barrier (2;2a;2b;2c) for a freezer (1;1a;1b;1c), comprising
- a foil (20;20a;20b;20c) having at least one opening (230;230a;230b;230c) therein,
- storage and transport means (21,22;21a,22a,211a,221a, 25a,27a;21b,22b,25b;21c,22c,25c,28c) for storing and moving the foil (20;20a;20b;20c) so as to transport the at least one opening (230;230a;230b;230c) to a desired position in order to allow access through the at least one opening (230;230a;230b;230c) to the interior of the freezer (1;1a;1b;1c) at the desired position, and
- tensioning means (28a;28b;28c,25c) for continuously keeping the foil (20;20a;20b;20c) in a tensioned state.

2. Convection barrier according to claim 1, wherein the storage and transport means comprise two elongate reels (21,22;21a,22a;21b,22b;21c,22c) to which the opposite ends of the foil (20;20a;20b;20c) are mounted and between which the foil extends, as well as a drive (25a;25b;25c,28c) for rotating the reels so as to wind up or to unwind the foil (20;20a;20b;20c) from the respective reel in order to transport the at least one opening (230;230a;230b;230c) to the desired position.

3. Convection barrier according to claim 1 or claim 2, further comprising a frame (23;23a;23b;23c) comprising the at least one opening (230;230a;230b;230c), the frame being inserted in the foil (20;20a;20b;20c) at an intermediate location between the two ends of the foil such that the at least one opening (230;230a;230b;230c) for allowing access to the interior of the freezer can be transported to any of the desired positions.

4. Convection barrier according to claim 2 or claim 3, wherein the drive comprises a motor (25a;25b) connected to one of the two reels (21a;21b), and wherein the tensioning means comprise a return spring (28a,28b) connected to the other one (22a;22b) of the at least two reels for continuously keeping the foil (20a,20b) in a tensioned state.

5. Convection barrier according to claim 4, wherein the drive further comprises a belt (27a) engaging both reels, and wherein the return spring (27a) is a spring having a low spring rate.

6. Convection barrier according to claim 4, wherein the return spring (27b) is a spring having a high spring rate.

7. Convection barrier according to claim 5 or claim 6, wherein the return (27a,27b) spring is a torsion spring.

8. Convection barrier according to claim 2 or claim 3, wherein the drive and the tensioning means comprise two motors (25c,28c), one of the two motors (25c) being connected to one (21c) of the two reels (21c,22c) and the other motor (28c) being connected to the other one (22c) of the two reels (21c,22c), and with a control unit (26c) for operating the two motors (25c,28c) in an asynchroneous manner so as to continuously keep the foil (20c) in a tensioned state.

9. Convection barrier according to any one of the preceding claims, wherein the foil (20;20a;20b;20c) is made from polytetrafluoroethylene.

10. Freezer (1;1a;1b;1c) comprising a housing (10;10a;10b;10c) and a door (100a;100b;100c), the housing having an opening (11) allowing access to the interior (12) of the freezer through the opening (11) as the door of the freezer is open, **characterized in that** a convection barrier (2;2a;2b;2c) according to any one of the preceding claims is arranged such that the opening (11) allowing access to the interior of the freezer is covered by the foil (20;20a;20b;20c).

11. Freezer according to claim 10, wherein the motor (25a;25b) or the motors (25c,28c), respectively, and/or the belt (27a), of the convection barrier is/are mounted to the freezer outside its housing (10;10a;10b;10c).
